# EUROPEAN PATENT APPLICATION

(11) **EP 0 643 230 A1**
(43) Date of publication of application: **15.03.1995**
(21) Application number: 93307109.4
(22) Date of filing: 09.09.1993
(51) Int. Cl.: F16B 33/00, F16B 35/00, F16B 37/00

(54) **Nut or bolt with fine adjustment**

(71) Applicant: Tai-Her, Yang, Si-Hu Town Dzan-Hwa (TW)
(72) Inventor: Tai-Her, Yang, Si-Hu Town Dzan-Hwa (TW)
(74) Representative: Sanderson, Michael John

(57) **Abstract**

A nut or bolt with fine adjustment comprises a primary screw thread (100, 200) formed in the nut or on the bolt, and an axial extent on which is formed an external secondary screw thread (101, 201) the pitch of which is less than that of the primary screw thread (100, 200). A correspondingly internally threaded auxiliary nut (103, 203) is screwed onto the axial extent to provide an effective packing and/or micro-adjustment feature to the combination, the location of the secondary screw thread being such that it does not interfere with normal rotation of the nut or bolt.

## Description

This invention relates to a nut or bolt with fine adjustment.

Conventional nuts and bolts are well-established for interconnecting components either with or without packing between the nut and/or bolt and the components being interconnected. The adjustment available from such nuts and bolts is determined by the pitch of the screw-thread on the nut and bolt. In certain circumstances, particularly with course-threaded nuts and bolts, it is not possible to achieve accurate adjustment therewith.

It would be desirable to be able to provide a nut or bolt having a conventional associated thread but which was such as to enable fine or micro-adjustment to be achieved thereby.

According to the present invention, there is provided a nut or bolt comprising a primary screw thread formed therein or thereon respectively, characterised in that said nut or bolt further comprises an axial extent on which is formed an external secondary screw thread the pitch of which is less than that of the primary screw thread, and a corresponding internally threaded auxiliary nut adapted to be received on said axial extent.

The provision of the smaller pitched screw thread on the associated axial extent is such that it in no way interferes with the portion of the nut or bolt by which rotation thereof is achieved, the smaller pitch of the secondary thread being such as to enable the auxiliary nut to provide an effective packing or micro-adjustment feature.

In one embodiment of the invention, a bolt includes a cylindrical shaft on which said primary screw thread is formed, and, at or adjacent the upper end of said shaft, an increased diameter axial extent on which said secondary screw thread is formed.

The bolt may include a head portion extending axially beyond said increased diameter extent and by which said bolt is rotated. The diameter of said head portion may be greater than, smaller than, or the same as that of said increased diameter axial extent.

Alternatively the upper surface of said increased diameter axial extent may be configured to enable rotation of the bolt, for example by including a polygonal recess therein to receive an associated wrench, or by having a groove formed therein to receive the blade of an associated screwdriver.

In an alternative embodiment of the invention, a nut comprises a body member through which extends a cylindrical bore having the primary screw thread formed therein, the body member including a first portion of polygonal external configuration by which the nut can be rotated, and a second portion, forming an axial extension of said first portion, on which said external secondary screw thread is formed and onto which the auxiliary nut is threaded.

By way of examples only, embodiments of the invention will now be described in greater detail with reference to the accompanying drawings of which:
- Fig 1: is a perspective view of a first bolt according to the invention with the auxiliary nut remote therefrom;
- Fig 1-1: is a front view, partly in vertical section of the bolt of Fig 1 with the auxiliary nut screwed thereon;
- Fig 2: is a perspective view of a nut according to the invention with the auxiliary nut remote therefrom;
- Fig 2-1: is a front view, partly in vertical section, of the nut of Fig 2 with the auxiliary nut screwed thereon;
- Fig 3, 4, 5 and 6: are perspective views of further bolts according to the invention with the auxiliary nuts remote therefrom, and
- Fig 3-1: is a front view, partly in vertical section, of the bolt of Fig 3 with the auxiliary nut screwed thereon.

Conventional nuts/bolts have been widely used for engaging or packing purposes and the present invention relates to an improved nut or bolt with packing and/or micro-adjustment facilities.

More specifically, apart from the internal or external primary thread on a nut or bolt, and the arrangement for coupling and rotating the nut or bolt with an associated tool (such as an external polygon, an inner sink polygon, concave teeth or a horizontal groove), the component of the invention includes a second thread which does not interfere with the head portion of the nut or bolt by which coupling and driving is achieved, this second thread having a smaller pitch than the primary thread and being engaged with an auxiliary nut to provide a packing or micro-adjustment feature thereto.

Based on the foregoing principle, the present invention can be widely applied to external polygonal nuts/bolts, or internal hexagonal bolts with cross-grooved, split headed or star-shaped heads and inner-concave coupling structures.

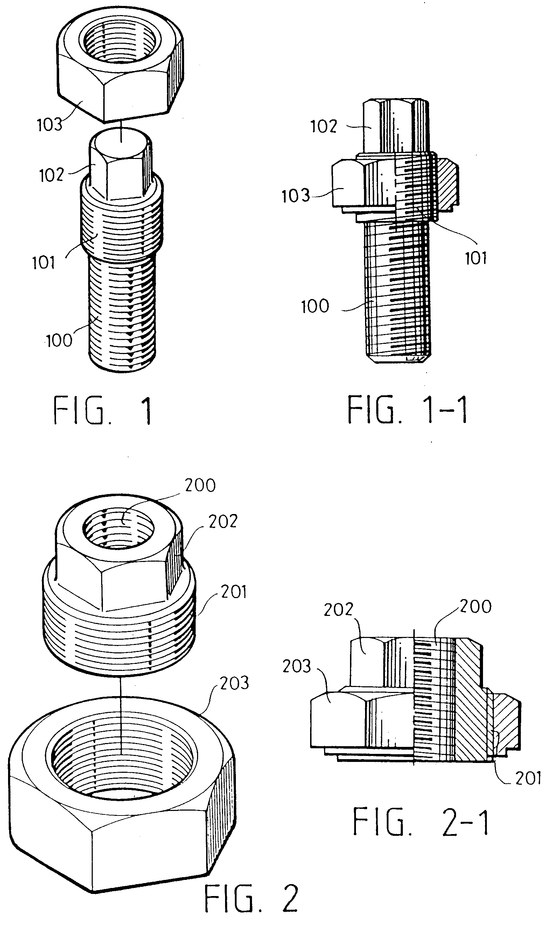

Referring to FIGS 1 and 1-1, the embodiment shows a bolt with an externally hexagonal head and provided with a thread having smaller pitch for packing or micro-adjustment and the application of a packing nut.

More particularly, the bolt includes a body 100 having a standard thread thereon, a portion 101 of increased diameter and having a thread thereon of smaller pitch than the standard thread, and a hexagonal head 102 extending upwardly therefrom. The outside diameter of the head 102 may be greater than, smaller than, or the same as the diameter of the packing or micro-adjustment portion 101 of smaller pitch.

An auxiliary nut 103 with an internal screw thread of the same smaller pitch is provided for screwing onto the portion 101 of the bolt to enable packing or micro-adjustment to be achieved.

In use, the threaded body 100 is screwed into the associated tapped hole or like receiving bore, and the auxiliary nut 103 is screwed onto the portion 101 for packing or micro-adjustment purposes. As the pitch of the screw thread on the portion 101 of the bolt is smaller than that on the body 100, a relatively large angular rotation of the nut 103 is required to achieve a given axial movement thereof, while the increased surface area of the nut 103 improves the packing facilities of the combination.

Referring to Figs 2 and 2-1, there is shown a direct packing nut the characteristics of which are as follows.

The outer surface of nut 202 is of polygonal shape (at least two faces), provided for rotational purposes, the nut 202 having an internal bore with a standard internal thread 200 for coupling with a threaded shaft or rod. The lower extent of the nut comprises an auxiliary portion of greater (or smaller) diameter than that of the polygonal surface and having a thread 201 with a smaller pitch formed thereon to receive an auxiliary nut 203 having a similar thread with a smaller pitch formed therein.

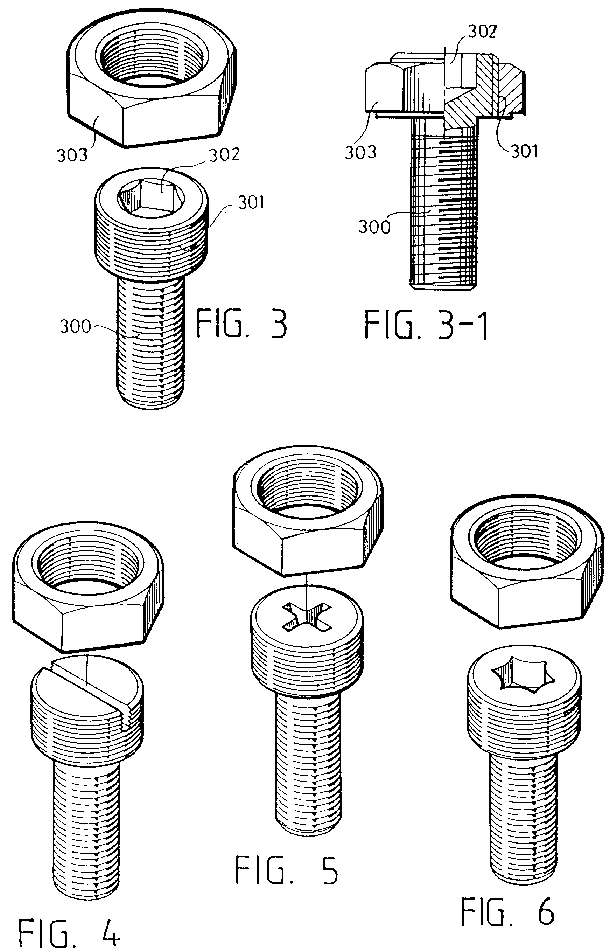

Referring to Figs 3 and 3-1, there is shown a double-staircase screw rod similar to that of Fig 1 wherein the hexagonal head in Fig 1 is replaced by an inner hexagonal sink hole 302 whereby the bolt can be driven with a hexagonal wrench. The related thread 301 and auxiliary nut 303 for packing and adjustment purposes are the same as shown in Fig 1.

Referring to Fig 4, the head of the illustrated double-staircase screw rod has a groove therein for being rotated by a single-blade screwdriver, the structure of the threads and the auxiliary nut for packing and adjustment purposes being the same as shown in Fig 1.

Referring to Fig 5, the head of the illustrated double-staircase screw rod has a cross groove for rotation by a cross-blade screwdriver, the structure of the threads and the auxiliary nut for packing and adjustment purposes being the same as shown in Fig 1.

Referring to Fig 6, the head of the illustrated double-staircase screw rod has a star groove for rotation by a star-type screwdriver, the structure of the threads and the auxiliary nut for packing and adjustment purposes being the same as shown in Fig 1.

The aforesaid embodiments use hexagonal screw heads or nuts for the purposes of explanation only. It is to be understood that the present invention is also applicable to driving/coupling arrangements and to external portions of screw heads or inner holes or auxiliary nuts of any geometrical shape.

Thus there is provided a simple specified packing and adjusting nut or bolt which is convenient to operate and the structure of which is simple and practical.

## Claims

1. A nut or bolt comprising a primary screw thread (100, 200) formed thereon or therein respectively, characterised in that said nut or bolt further comprises an axial extent on which is formed an external secondary screw thread (101, 201) the pitch of which is less than that of the primary screw thread (100, 200), and a correspondingly internally threaded auxiliary nut (103, 203) adapted to be received on said axial extent.

2. A bolt as claimed in Claim 1 and including a cylindrical shaft on which said primary screw thread (100) is formed, and, at or adjacent the upper end of said shaft, an increased diameter axial extent on which said secondary screw thread (101) is formed.

3. A bolt as claimed in Claim 2 and including a head portion (102) by which the bolt is rotated.

4. A bolt as claimed in Claim 2 in which the upper surface of the increased diameter axial extent is configured to enable rotation of the bolt.

5. A bolt as claimed in Claim 4 in which the upper surface of the increased diameter axial extent includes a polygonal recess (302) therein to receive an associated wrench.

6. A bolt as claimed in Claim 4 in which the upper surface of the increased diameter portion has a linear groove, a cross groove or a star groove for receiving therein the correspondingly shaped blade of an associated screwdriver.

7. A nut as claimed in Claim 1 and comprising a body member through which extends a cylindrical bore having the primary screw thread (200) formed thereon, the body member including a first portion of polygonal external configuration by which the nut can be rotated, and a second portion, forming an axial extension of the first portion, on which said external secondary screw thread (201) is formed and onto which the auxiliary nut (203) is threaded.
